# EUROPEAN PATENT SPECIFICATION

(11) **EP 1 364 271 B1**
(45) Date of publication and mention of the grant of the patent: **20.10.2004**
(21) Application number: 02700442.3
(22) Date of filing: 20.02.2002
(51) Int. Cl.: G06F 1/00

(54) **CONTROLLING ACCESS TO PROTECTED DIGITAL CONTENT**
ZUGRIFFSSTEUERUNG AUF GESICHERTEN DIGITALEN INHALT
CONTROLE D'ACCES AUX CONTENUS DE DONNEES STOCKEES ELECTRONIQUEMENT ET PROTEGEES

(30) Priority: 27.02.2001 JP 2001053193
(43) Date of publication of application: 26.11.2003
(73) Proprietor: International Business Machines Corporation, Armonk, NY 10504 (US)
(72) Inventor: MORI, Masaya, Kasawaki, Kanagawa 215-0015 (JP); OKAMOTO, Yoriko, Yokohama, Kanagawa 225-0015 (JP)
(74) Representative: Moss, Robert Douglas
(86) International application number: PCT/GB2002/000727
(87) International publication number: WO 2002/069070

(56) References cited:
- EP-A- 0 684 538
- EP-A- 1 109 351
- US-A- 5 757 908
- US-A- 5 857 020
- US-A- 5 925 127
- US-A- 6 104 813

## Description

### Technical Field of the Invention

The present invention relates to a method, system and program for controlling access to electronically stored and protected data contents and the delivery of such contents, and more particularly to a technique involving establishing an expiration date or time for the use of the contents.

### Background Art

Along with the progress of network technologies such as the Internet, network delivery of digital contents has been conducted on a commercial basis, including images, videos, audio, application software, etc. Unlike the case where the contents are recorded in media such as a CD-ROM and sold, the network delivery of these digital contents needs no production, inventory, distribution, and over-the-counter sale, so that it is expected to be a promising means to expand the sales of digital contents (or information). Namely, the network delivery can deliver contents to users only by exchanging information, and a direct sale of the contents is completed almost automatically by using an appropriate means of settlement. Sellers can cut down on managerial resources such as personnel, equipment, assets, etc., while users can acquire contents quickly at any time wherever they are. Therefore, network delivery of contents is convenient both for sellers and users, leading to a reduction of selling costs and, in turn, selling prices.

However, since the contents being sold are digital information, they are essentially reproducible, wherein deterioration in quality due to the reproduction is extremely small. In addition, the reproduced contents may be distributed almost immediately on a global scale, leading to the possibility that the rights of contents owners such as copyright may be widely infringed. This is why a technique to prevent reproduction is important, such as the provision of various kinds of authentication means in contents execution programs, whereby only a person who is authenticated can activate the program to use the contents.

Alternatively, sometimes an expiration date is established in association with the use of contents. For example, such a case would be useful when distributing a special purpose application software for trial use or shareware that is distributed at a low price. Furthermore, when delivering music software or video software such as a movie for the purpose of accounting, an expiration date may be established. In this way, it is possible to enlarge opportunities to use contents by selling them with the expiration date established or to facilitate the use of contents by making the charge for use of them cheaper.

A common technique to establish an expiration date for the contents is to apply the expiration date to the contents or the contents execution programs and to make a decision whether the expiration date has been expired using a system timer of an information processing system, such as a computer that executes the program. As an example, Japanese Unexamined Patent Publication No. 1999-31130 describes a technique for applying an expiration date to delivery data from the Internet.

However, the aforementioned expiration date techniques alone may still allow unauthorized use by users. This is because the expiration date of the contents is determined by using a system timer of a computer on which the contents execution program runs. Thus, the use or regeneration of the contents may become possible even if the expiration date has actually expired, if a user intentionally changes the system timer to set back the date and time to within the expiration date. As a result, controls which work by establishing the expiration date for the use of the contents may be bypassed.

US patent 5757908 shows how the use of software for a trial period may be controlled by provision of a temporary access key. The key includes trial interval data which is compared with a system clock. Resetting the clock each time a trial use is requested can be detected by tracking date/time stamps in the system and using the most recent date to compare with the system clock.

### Disclosure of the Invention

The present invention provides a technique for preventing illegal use of contents by users when an expiration date is established for the use of the contents.

According to the present invention, contents or contents execution programs have information indicative of an expiration date or time. The expiration date information is embedded into external files, contents, or contents execution programs, for example. The expiration date information could be a start of use time, an end of use time (expiration date), and a last time of use, which are used as authentication data to conduct authentication when making use of the contents (e.g., when executing the contents execution program). A technique for authentication would be, for example, that two requirements should be satisfied when using the contents in order to execute the execution program, including (1) that the current time acquired from the system timer is between the start of use time and the end of use time (or the current time is prior to the end of use time); and (2) that the current time is after the last time of use. Furthermore, the present invention provides for a counter for counting time during an operation of the system or the Operating System independently of the system timer, wherein if a difference is found between the time acquired from this counter and the system timer when executing the contents, the end date of use (i.e., expiration date) can be corrected using the time period corresponding to the difference. This prevents the continuation of illegal use due to a change of the time that is targeted at the period between the last date of use and the end date of use (expiration date).

It will be recognized that the word 'time' as used herein is intended to include calendar dates, as well as clock times.

Using such a method for executing the contents, the use of the contents within the expiration date is allowed, and in addition, even if the user wrongly sets back the system timer, the use of the contents is restricted in order to prevent the illegal use of the contents with the expiration date applied when the above requirement (2) is not satisfied.

### Brief Description of the Drawings

An embodiment of the present invention will now be described by way of example only, with reference to the accompanying drawings. Throughout the drawings, the same elements are shown with the same reference numbers.

Fig. 1 is a conceptual diagram of an example system that implements a method for delivering contents according to an embodiment of the present invention.

Fig. 2 is a block diagram depicting a terminal system (client) and a server system 5.

Fig. 3 is a flowchart depicting an example method for delivering contents according to an embodiment of the present invention.

Fig. 4 is a flowchart illustrating regeneration processing of the contents on the part of client.

Fig. 5 is a diagram illustrating a flow of said processing in time series.

### Detailed Description of a Preferred Embodiment of the Invention

In the following embodiment of the present invention, a method and system will be described. However, it will be obvious to those of ordinary skill in the art that the present invention could also be implemented as a program available in a computer. Therefore, the present invention is implemented in hardware, software and a combination thereof. The program could be recorded on any computer-readable medium such as a hard disk, CD-ROM, optical storage or magnetic storage.

Furthermore, in the following embodiment, a typical computer system may be used. A computer system used in the embodiment comprises hardware resources, including a central processing unit (CPU), main storage (main memory, i.e., RAM), nonvolatile storage (ROM), coprocessor, image accelerator, cache memory, input/output controller (I/O), etc. In addition, external storage such as a hard disk drive and communication means to connect to a network such as the Internet may be provided as well. Such a computer system includes various kinds of computers such as a personal computer, workstation, mainframe computer, etc.

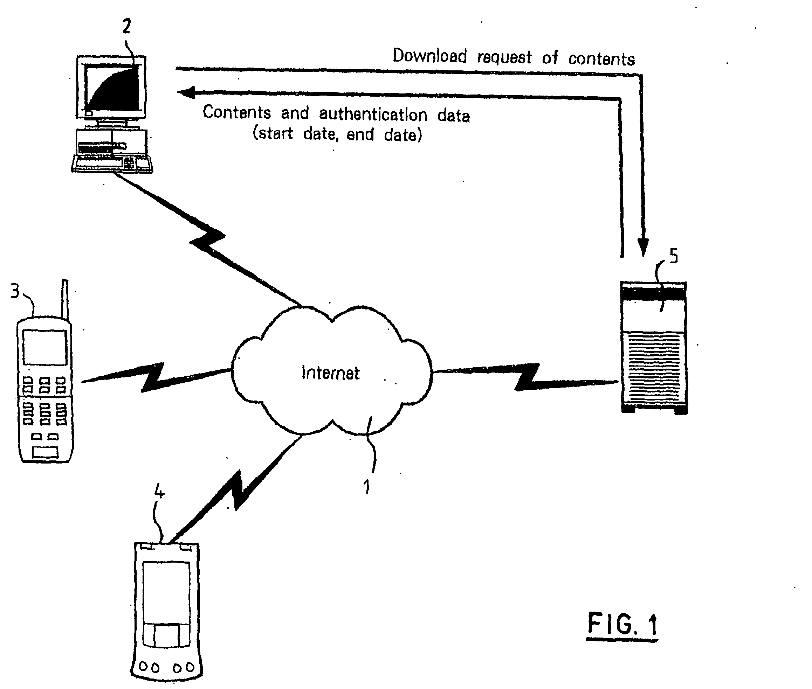

Fig. 1 is a conceptual diagram of an exemplary system that implements a method for delivering contents according to an embodiment of the present invention. The contents delivery system according to the present invention comprises terminals requiring delivery of contents, including a computer system 2, cellular phone 3, PDA (personal digital assistants) 4, and a server 5 for delivering contents, over the Internet 1. The terminal serving as a destination for the contents (hereinafter simply called terminal), such as computer system 2, cellular phone 3, PDA 4, issues a request to server 5 for delivery of contents, then the server 5 delivers the contents and authentication data to the terminal. Receiving the contents and authentication data, the terminal regenerates or executes the contents for users by using a means as described later in detail.

The Internet 1 is one type of network that is open worldwide, wherein the communication is made according to the IP (Internet protocol), as is well known in the art. The Internet is exemplified herein. However, other types of networks may be also used. For example, a network connected by a dedicated telephone line or a cable network such as a CATV may be used. The concept of the Internet also includes an intranet wherein the use is generally restricted. In addition, there will be described an example where the terminals are connected to the server 5 by way of the communication means such as the Internet but the request and delivery may not be necessarily performed by way of the network. For example, in response to a request from a user by way of mail or telephone, a business proprietor managing the server 5 may deliver the contents and authentication data by way of media such as a CD-ROM. However, when not using the network, since download programs described below can not be used, thus compressed files and authentication data 2 are to be delivered.

The computer system 2 is a typical computer system as described above and has a typical communication means for connecting to the Internet 1. The cellular telephone 3 has data communication functions, such as i-mode, corresponding to the Internet as well as telephone functions. The PDA 4 fundamentally has the functions similar to the computer system 2 except that part of the functions are restricted, thus providing for a communication function to connect to the Internet. Preferably installed on the computer system 2, cellular phone 3 and PDA 4 is appropriate browser software that issues an HTTP (Hypertext Transfer Protocol) request. The server 5 may be a typical computer system having an appropriate communication means.

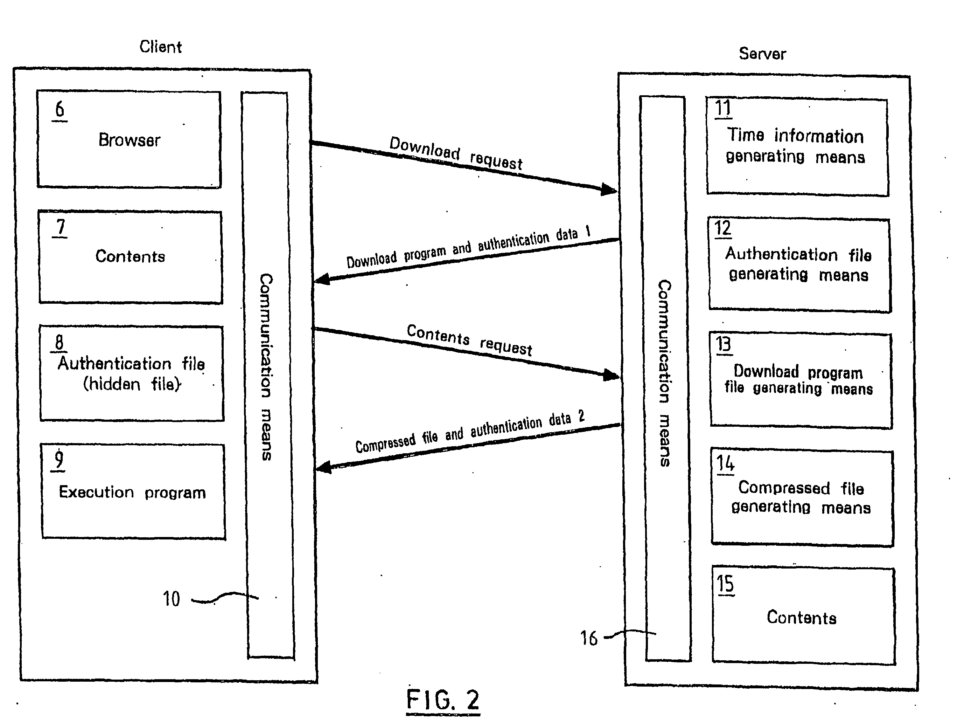

Fig. 2 is a block diagram depicting a terminal system (client) and a server system 5. The client system comprises a browser 6, contents 7, authentication file 8, execution program 9, and communication means 10, for example. The server system comprises time information generating means 11, authentication file generating means 12, download program file generating means 13, compressed file generating means 14, contents 15, and communication means 16, for example. It should be noted that the client system in Fig. 2 shows the condition after the download program file has been executed.

The browser 6 in the client system is used to connect to the Internet 1 and to issue an HTTP request to the server 5. A typical browser may exemplify the browser 6.

The contents 7 are contents data that has been downloaded from the server 5 and is ready for use. The contents 7 include software resources subject to use for users, such as voice files, image files, application programs, etc.

The authentication file 8 contains authentication 1 data that is referred to when downloading the contents, authentication 2 data that is referred to when decompressing the contents, and authentication 3 data that is referred to when regenerating and executing the contents, as described below in detail. These authentication data are preferably retained as a hidden file. This prevents the user from tampering. In addition to making them a hidden file, it is effective to rewrite the edit date of this authentication file (date and time of file generation and change) into the date of installation of the OS. This makes it difficult for users to search for the hidden file, thereby more effectively preventing it from being tampered.

The execution program 9 is a program that regenerates and executes the contents 7. For example, it may be an MP3 regeneration program, an MPEG regeneration program, or a program for activating an application program.

Communication means 10 communicates with communication means 16 of server 5 over the Internet 1.

Time information generating means 11 of server 5 generates the current date and a date after the valid term (i.e., expiration date) in response to a download request from a client, and further primarily generates data corresponding to a start date of use and an end date of use that are to be contained in the authentication 3 data.

Authentication file generating means 12 generates authentication 3 data from the time information generated by the time information generating means 11 and further generates the authentication 1 data and authentication 2 data automatically. The authentication 1 data indicates where the compressed contents file (including the authentication 2 data) is stored, which is used by the download program. The authentication 2 data is used to decompress the compressed file. The authentication 3 data is used when making use of the decompressed contents (i.e., regeneration and execution).

Download program file generating means 13 generates a program file for downloading the compressed file, as described below. Embedded in the download program file is the authentication 1 data.

Compressed file generating means 14 generates the encoded execution programs, the authentication 3 data, and the contents. Embedded in the compressed file is the authentication 2 data. Encoding of the execution programs and contents might be scrambled such that they are decoded using the authentication 2 data. Scrambling uses, for example, the data hidden scheme or bit shift scheme. The compressed file is preferably decompressed in a self-extracting manner when it is executed on the part of client. The compressed file is stored at the address specified by the authentication 1 data.

The contents 15 are software resources used by users. According to the embodiment of the invention, the contents 15 as such are not to be downloaded to users.

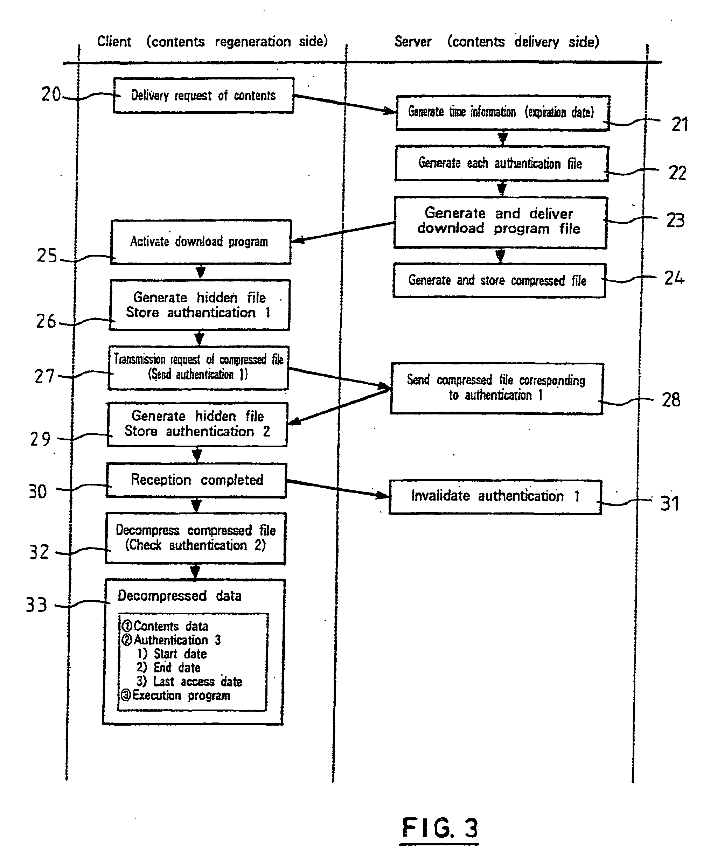

Fig. 3 is a flowchart depicting an example method for delivering contents according to an embodiment of the present invention. First, the client issues a request to the server 5 for delivery of contents (step 20). The request may be an HTTP request, for example.

In receipt of this request, the server 5 generates time information (step 21). The time information is generated by the time information generating means 11 using the system timer of the server 5. The generated information is the date when the request is received (i.e., start date for use) and the date that results from adding the valid term to the start date of use (i.e., end date of use, that is, expiration date).

Then, the server 5 generates the authentication files using the authentication file generating means 12 (step 22). The authentication files include authentication 1 to 3 data, as described above. The authentication 1 data specifies any address in the server, while the authentication 2 data is generated randomly. Concerning the authentication 3 data, the times generated by the time information generating means 11 determine the start date of use and the end date of use. On the other hand, concerning the authentication 3 data, the last date of use (i.e., last access date) might be any value since the contents have not been utilized. However, it is assumed here that the last date is the start date of use.

Next, the server 5 generates the download program file, which embeds the authentication 1 data, by using the download program file generating means 13 and sends it to the client (step 23).

In addition, the server 5 generates the compressed file using compressed file generating means 14, in preparation for a request for the compressed file from the client. The compressed file generated is stored at the address specified by the authentication 1 data (step 24).

Upon receipt of the download program file, the client activates the download program (step 25). The activation of the download program may be automatically activated upon completion of the receipt.

Then, the client stores the authentication 1 data embedded in the download program file in the authentication file 8 (step 26), then issues a download request for the compressed file according to the processing of the download program (step 27). At this time, the download request requires that a file which is stored at an address referenced by the authentication 1 data be downloaded. Thus the compressed file can not be downloaded if no file exists at the address referenced with the authentication 1 data, that is, even if the user copies the download program and gives it to a third party, the third party can not download the compressed file because he does not have the hidden file in which the authentication 1 data is stored. In this way, the download program file that is illegally copied could be invalidated, thereby preventing illegal copies by the third parties.

Upon receipt of the request for transmission of the compressed file, the server 5 sends the file that is referenced with the authentication 1 data (step 28). This file should be the intended compressed file if it is the one as processed in step 24.

On receipt of the compressed file, the client separates the authentication 2 data from the compressed file and stores the authentication 2 data in the hidden file (step 29). Upon completion of receipt of the compressed file (step 30), the server 5 invalidates the authentication 1 data (step 31). This prevents repetitive or illegal downloading.

Upon completion of downloading of the compressed file, the client performs decompression processing (step 32). Decompression may be performed automatically in a self-extracting manner. According to the present invention, upon decompression, the compressed file is decoded by referring to the authentication 2 data. In this way, by making decompression impossible without referring to the authentication 2 data, an illegal copy of the compressed file can be prevented.

After decompression of the compressed file, the contents, authentication 3 data and execution program are retained in an available condition in the client system (step 33). The execution program may not be activated without referring to the authentication 2 data. This prevents illegal use of the contents after decompression.

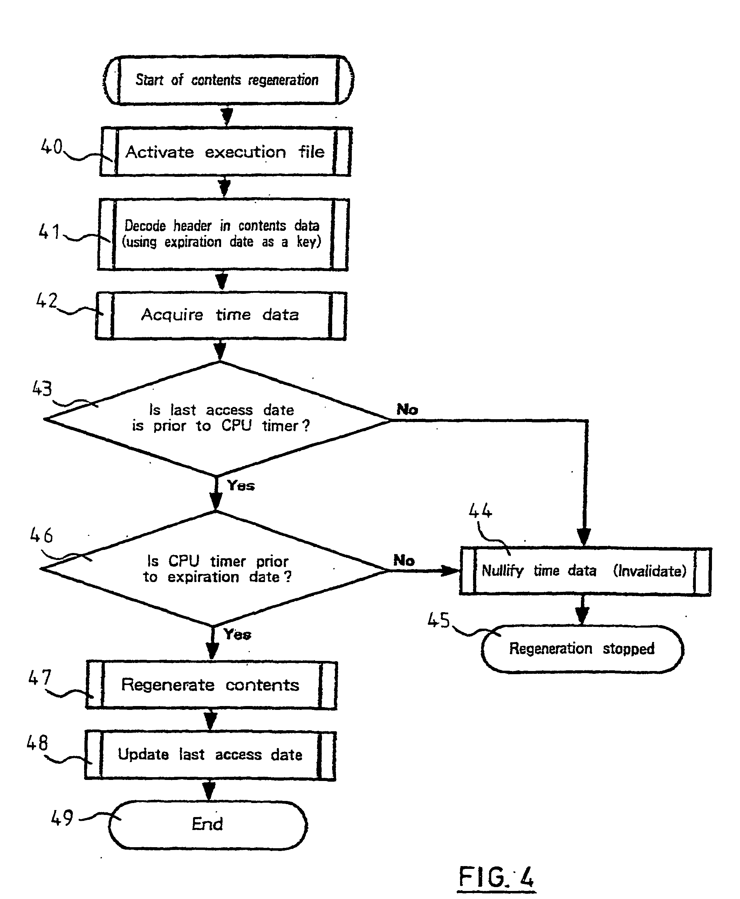

Fig. 4 is a flowchart illustrating regeneration processing of the contents on the part of client. First, a terminal of the client activates the execution file (step 40). As described above, the authentication 2 data may be referred to upon this activation.

Then, the header of the contents is decoded using the expiration date (step 41). It is assumed that encoding corresponding to this decoding has been performed on the contents data in advance. If the contents data has been encoded using the expiration date like this, the contents may be prevented from being copied illegally.

Then, the time data stored in the hidden file as the authentication 3 data is acquired (step 42). Using this acquired time data, it is determined whether the last date of access (last date of use) is prior to the time of the system timer (CPU timer) (step 43). If the result is No, this indicates a contradiction which should not occur in normal use, that is, the CPU timer is prior to the last date of access. In this case, on the basis of determination that the CPU timer was set back wrongly, the time data (authentication 3 data) is nullified (step 44) and the regeneration is stopped (step 45). Nullifying the authentication 3 data (time data), the contents data will be impossible to be decoded thereafter, thereby disabling the use of the contents.

On the other hand, if the result of determination step 43 is Yes, it is determined whether the time of the CPU timer is prior to the expiration date (i.e., within the expiration date) (step 46). If the result is No, the authentication 3 data is nullified and then the regeneration is stopped as in the case of negation of the determination step 43. This restricts the use of the contents that have exceeded the expiration date.

If the result of determination step 46 is Yes, the contents are regenerated (step 47). If determination steps 43 and 46 are affirmative, there is legal use within the expiration date.

After regeneration of the contents, the last date of access (last date of use) for the authentication 3 data is updated (step 48). The last date of use updated will be referred to at the next time when the contents are used. Thereafter, the regeneration processing is terminated (step 49). Alternatively, the date of downloading may be recorded as the last date of use when the contents have been downloaded.

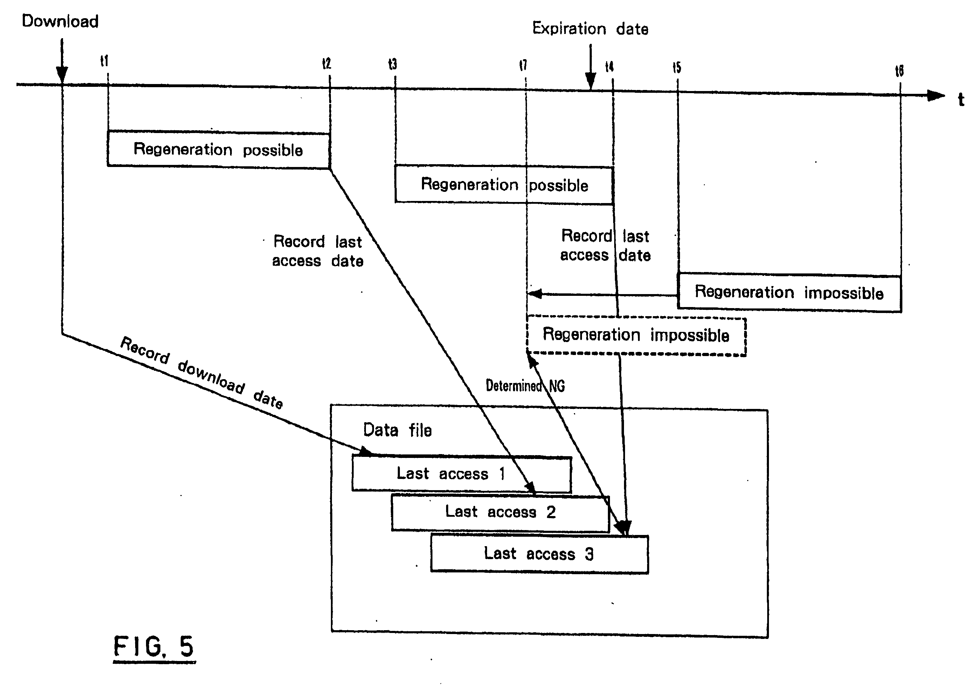

Fig. 5 is a diagram illustrating the processing flow in time. When downloading is performed, the date of downloading is recorded in the data file (authentication 3 data) as the last date of use. This is made to be the last access 1. Then, if the processing shown in Fig. 4 is performed when regeneration is started at time t1, regeneration is performed normally because the date of regeneration (current time) is after the last date of access and within the expiration date. Then, when regeneration is finished at time t2, its time is recorded as the last date of use for the last access 2.

Then if regeneration is attempted at time t3, the regeneration is enabled just like at time t1. It is noted that if the expiration date expires in the course of regeneration, regeneration should be performed to the end.

When regeneration is attempted at time t5 after the expiration date, the current date is after the expiration date (end date of use), thus regeneration is disabled. Assuming that at this moment the user sets back the system timer (CPU timer) to time t7 attempting an illegal use. In this case, determination step 46 in Fig. 4 is affirmed, while determination step 43 is denied. That is, since time t4 is recorded in the last access 3 as the last date of use in the previous regeneration, a contradiction occurs in that time t7 is prior to time t4. According to the present invention, such an illegal use is detected and prevented.

However, assuming that the user does not perform the second regeneration operation (i.e., t3 through t4) and instead performs an illegal operation of the timer (to set back the current time), such that the third regeneration operation (t5 through t6), which is essentially impossible to be regenerated, is to be between time t2 and the expiration date, regeneration could be performed and further the last date of use is illegally brought forward. If such an illegal operation is repeated, it is feared that a substantial expiration date might be prolonged. Against such a case, the following countermeasures are taken.

Namely, there is provided a counter means distinct from the system timer in an independent program such as a DLL (dynamic link library) that cooperates with the execution program 9. Since such an independent program does not stop while the system is running or a specific OS is running, it can be configured so as to conserve the expiration date as long as the computer (or OS) is running. Namely, a counter by means of an independent program is used to always update the current time with the system timer when the system (or OS) is started up. Therefore, a determination is made as to whether illegal setting back of the system timer was performed when activating the execution program 9 (i.e., if an illegal operation of the timer was performed, the time of the independent program should proceed ahead of the system timer), then a time period corresponding to an illegal operation is recorded by referring to the system timer. Upon execution of the execution program 9, the last date of access and the expiration date (alternatively, an acquired value of the CPU timer (or system timer)) are corrected using said time period. After that, the aforementioned processing is to be performed using the time data corrected. It is noted that the correction should be made such that when correcting the last date of access and the expiration date, said time period is subtracted from their original dates, while when correcting the acquired value of the CPU timer, said time period is added to the acquired value. According to this, a legal expiration date is able to be determined. Consequently, when correcting the last date of access and the expiration date, the last date of access and expiration date that have been corrected are recorded, while when correcting an acquired value of the CPU timer, said time period is recorded in order to be referred to when processing the execution program later. It is obvious that the independent program should be installed when executing the execution program 9 for the first time, and thereafter should function all the time while the system is operating.

As mentioned above, the present invention has been described with regard to the preferred embodiments, however, the present invention is not limited to those embodiments and various modifications and changes are possible.

For example, in the above embodiments, each of the authentication data 1, 2 and the time data (start date of use) of the authentication data 3 are used to prevent copying of each file or program. However, the technique for preventing copying is not limited to the aforementioned method, but other various techniques may be used. For example, an electronic watermark may be used.

Also, in the above embodiments, another file (i.e., a hidden file) is used to record authentication data, however, this may not be the only case. For example, the expiration date may be embedded in the contents themselves or the execution program itself.

In the above embodiments, an operation for setting back the system timer in the course of regeneration may be prohibited.

Further, in the above embodiments, the computer system 2, cellular telephone 3, and PDA 4 are exemplified as a client system, however, they may not be the only types of client. For example, a video playback unit connected to the Internet 1 may be used. In this case, time information and other authentication data would be embedded in a header area of video data, wherein various kinds of authentication processing described above could be performed using this authentication data.

Furthermore, in the embodiments described above, the server 5 sends the contents and necessary authentication data at the same time in response to a delivery request for the contents. However, they may be delivered at different times. For example, in response to a request from a client, authentication data (i.e., expiration date information and data necessary to regenerate and execute the contents) might be sent first, then the contents might be delivered each time when a client desires regeneration and execution of the contents, that is to say, on demand delivery. In this case, the contents delivered on demand become available after regeneration and execution as described above in the embodiments by using the authentication data previously acquired. Concerning the authentication data previously acquired, authentication may be granted comprehensively with respect to the contents within a predetermined range, that is, authentication data and contents need not have one-to-one correspondence, whereby one authentication may be granted to a plurality of contents or the contents that are to be provided in the future.

## Claims

1. A method for controlling access to electronically stored and protected data contents (7); comprising the steps of:
acquiring (41) authentication data (8) including a start of use time specifying the permitted start of use time for the contents, an end of use time specifying an expiration time for the contents, and a last time of use specifying when the contents were last used;
acquiring (42) the current time from a system timer (11);
determining (43) whether said last time of use is prior to said current time;
determining (46) whether said current time is prior to said end of use time;
permitting (47) access to said contents for utilization thereof if the results of both of said determination steps are true; and
updating (48) said last time of use with the time when said utilization is finished, **characterized in that**:
a program for implementing a counter function is provided in a computer system on which said contents are utilized, the counter always operating while the system operates, the method further comprising the steps of:
initializing the time of said counter function with a time acquired from the system timer when activating said system;
recording the difference between the time of said counter and the time of the system timer when utilizing said contents; and
correcting said last time of use and said end of use or said current time using a time period corresponding to said difference.

2. The method according to claim 1, wherein all or part of said contents are encoded using encryption data contained in said authentication data, the method further comprising the step of decoding the encoded contents using said encryption data.

3. The method according to claim 2, further comprising the step of nullifying said encryption data if the result of either of said first or second determination step is false.

4. The method according to claim 1, wherein said authentication data is recorded in a hidden file.

5. The method according to claim 1 wherein said authentication data is embedded in said contents.

6. The method according to claim 1 wherein said authentication data is embedded in a program that utilizes said contents.

7. A method according to any preceding claim including the steps of generating said authentication data in response to a download request for the contents from a client computer to a server computer; and
sending the contents, a utilization program for said contents, and said authentication data or an encoded file thereof, from the server computer to the client computer over a network.

8. A computer system for controlling access to electronically stored and protected data contents (7); comprising:
means (41) for acquiring authentication data (8), wherein said authentication data includes a start of use time specifying the permitted start of use time for the contents and an end of use time specifying an expiration time for the contents;
means (41) for acquiring the current time from a system timer (11);
means (43) for determining whether the last time of use of said contents is prior to said current time;
means (46) for determining whether said current time is prior to said end of use time;
means (47) for permitting access to said contents for utilization thereof if determinations made by both of said determination means are true; and
means (48) for updating said last time of use with the time when said utilization of said contents is finished, **characterized in that**:
the system further comprising means for implementing a counter function that always operates while the system operates, and wherein said means for implementing said counter function comprises means for initializing the time of said counter function with a time acquired from the system timer when activating said system; and means for counting time independently of said system timer; the system further comprising means for recording the difference between the time of said counter and the time of the system timer; and means for correcting said last time of use and said end time of use or said current time using a time period corresponding to said difference.

9. The system according to claim 8, further comprising means for encoding all or part of said contents using encryption data contained in said authentication data, wherein said regeneration or execution program further comprising the function of decoding said encoded contents using said encryption data.

10. The system according to claim 9, comprising means for nullifying said encryption data if a determination made by either said first or second determination means is false.

11. The system according to claim 8, further comprising means for storing said authentication data in a hidden file of the system.

12. The system according to claim 8, further comprising means for embedding said authentication data in said contents.

13. The system according to claim 8, further comprising means for embedding said authentication data in a program for utilizing said contents.

14. A client-server computer system comprising a computer system according to any one of claims 8 to 13 as a client, and a server computer, said server computer comprising:
means for generating said authentication data in response to a request from said client computer to download said contents from said server computer; and
means for sending said contents, a utilization program for said contents and said authentication data or an encoded file thereof from the server computer to the client computer over a network.

15. A program executable by a computer for controlling access to electronically stored and protected data contents (7), the program comprising instructions which, when executed, perform the steps of
acquiring (41) authentication data (8) including a start of use time specifying the permitted start of use time for the contents, an end of use time specifying an expiration time for the contents, and a last time of use specifying when the contents were last used;
acquiring (42) the current time from a system timer (11);
determining (43) whether said last time of use is prior to said current time;
determining (46) whether said current time is prior to said end of use time;
permitting (47) access to said contents for utilization thereof if the results of both of said determination result are true; and
updating (48) said last time of use with the time when said utilization of said contents is finished, **characterized in that**:
the program when executed, performs the further steps of initializing the time of an independent counter with a time acquired from the system timer when activating the system and counting time independently of said system timer;
acquiring the time from the counter;
recording the difference between the time of said counter and the time of the system timer; and
correcting said last time of use and said end time of use or said current date using a time period corresponding to said difference.

16. The program according to claim 15, wherein all or part of said contents are encoded using encryption data contained in said authentication data, the program, when executed, further performing the steps of:
decoding the encoded contents using said encryption data; and
nullifying said encryption data if the result of either the first or second determination step is false.

## Patentansprüche

1. Verfahren zur Steuerung des Zugriffs auf einen elektronisch gespeicherten und geschützten Dateninhalt (7), das die folgenden Schritte umfasst:
Abrufen (41) von Berechtigungsnachweisdaten(8), die einen Nutzungsbeginnzeitpunkt, der den Zeitpunkt des erlaubten Nutzungsbeginns für den Inhalt angibt, einen Nutzungsendezeitpunkt, der einen Ablaufzeitpunkt für den Inhalt angibt, und einen Zeitpunkt der letztmaligen Nutzung, der angibt, wann der Inhalt zuletzt verwendet wurde, einschließen;
Abrufen (42) der aktuellen Zeitangabe von einem Systemzeitgeber (11);
Feststellen (43), ob der Zeitpunkt der letztmaligen Nutzung vor der aktuellen Zeitangabe liegt;
Feststellen (46), ob die aktuelle Zeitangabe vor dem Nutzungsendezeitpunkt liegt;
Gestatten (47) des Zugriffs auf den Inhalt, um ihn zu nutzen, wenn die Ergebnisse beider Feststellungsschritte positiv sind; und
Aktualisieren (48) des Zeitpunkts der letztmaligen Nutzung auf den Zeitpunkt, zu dem die Nutzung beendet wird, **dadurch gekennzeichnet, dass**:
ein Programm zur Ausführung einer Zählerfunktion in einem Rechnersystem bereitgestellt wird, auf dem der Inhalt genutzt wird, wobei der Zähler immer in Betrieb ist, während das System in Betrieb ist, wobei das Verfahren des Weiteren die folgenden Schritte umfasst:
Setzen der Zeitangabe der Zählerfunktion auf eine von dem Systemzeitgeber abgerufene Zeitangabe als Anfangswert, wenn das System aktiviert wird;
Aufzeichnen des Unterschieds zwischen der Zeitangabe des Zählers und der Zeitangabe des Systemzeitgebers, wenn der Inhalt genutzt wird; und
Korrigieren des Zeitpunkts der letztmaligen Nutzung und des Nutzungsendezeitpunkts oder der aktuellen Zeitangabe mit Hilfe eines Zeitraums, der dem Unterschied entspricht.

2. Verfahren nach Anspruch 1, wobei der gesamte Inhalt oder ein Teil des Inhalts mit Hilfe von Verschlüsselungsdaten codiert wird, die in den Berechtigungsnachweisdaten enthalten sind, wobei das Verfahren des Weiteren den Schritt der Decodierung des codierten Inhalts mit Hilfe der Verschlüsselungsdaten umfasst.

3. Verfahren nach Anspruch 2, das des Weiteren den Schritt umfasst, in dem die Verschlüsselungsdaten für ungültig erklärt werden, wenn das Ergebnis von dem ersten oder aber dem zweiten Feststellungsschritt negativ ist.

4. Verfahren nach Anspruch 1, wobei die Berechtigungsnachweisdaten in einer versteckten Datei aufgezeichnet werden.

5. Verfahren nach Anspruch 1, wobei die Berechtigungsnachweisdaten in dem Inhalt eingebettet werden.

6. Verfahren nach Anspruch 1, wobei die Berechtigungsnachweisdaten in einem Programm eingebettet werden, das den Inhalt verwendet.

7. Verfahren nach einem vorhergehenden Anspruch, das die Schritte der Erzeugung der Berechtigungsnachweisdaten als Antwort auf eine Anforderung für das Herunterladen des Inhalts von einem Client-Rechner auf einen Server-Rechner und
des Sendens des Inhalts, eines Programms zur Nutzung des Inhalts und der Berechtigungsnachweisdaten oder einer codierten Datei dieser Berechtigungsnachweisdaten von dem Server-Rechner an den Client-Rechner über ein Netzwerk beinhaltet.

8. Rechnersystem zur Steuerung des Zugriffs auf einen elektronisch gespeicherten und geschützten Dateninhalt (7), das Folgendes umfasst:
ein Mittel (41), um Berechtigungsnachweisdaten (8) abzurufen, wobei die Berechtigungsnachweisdaten einen Nutzungsbeginnzeitpunkt, der den Zeitpunkt des erlaubten Nutzungsbeginns des Inhalts angibt, und einen Nutzungsendezeitpunkt, der einen Ablaufzeitpunkt für den Inhalt angibt, einschließen;
ein Mittel (41), um die aktuelle Zeitangabe von einem Systemzeitgeber (11) abzurufen;
ein Mittel (43), um festzustellen, ob der Zeitpunkt der letztmaligen Nutzung des Inhalts vor der aktuellen Zeitangabe liegt;
ein Mittel (46), um festzustellen, ob die aktuelle Zeitangabe vor dem Nutzungsendezeitpunkt liegt;
ein Mittel (47), um den Zugriff auf den Inhalt zu dessen Nutzung zu gestatten, wenn die von beiden Feststellungsmitteln getroffenen Feststellungen positiv sind; und
ein Mittel (48), um den Zeitpunkt der letztmaligen Nutzung auf den Zeitpunkt zu aktualisieren, zu dem die Nutzung des Inhalts beendet wird, **dadurch gekennzeichnet, dass**:
das System darüber hinaus ein Mittel umfasst, um eine Zählerfunktion auszuführen, die immer in Betrieb ist, während das System in Betrieb ist, und wobei das Mittel zur Ausführung der Zählerfunktion ein Mittel umfasst, um die Zeitangabe der Zählerfunktion auf eine von dem Systemzeitgeber abgerufene Zeitangabe als Anfangswert zu setzen, wenn das System aktiviert wird; und ein Mittel, um die Zeit unabhängig von dem Systemzeitgeber zu erfassen; wobei das System des Weiteren ein Mittel umfasst, um den Unterschied zwischen der Zeitangabe des Zählers und der Zeitangabe des Systemzeitgebers aufzuzeichnen; und ein Mittel, um den Zeitpunkt der letztmaligen Nutzung und den Nutzungsendezeitpunkt oder die aktuelle Zeitangabe mit Hilfe eines Zeitraums zu korrigieren, der dem Unterschied entspricht.

9. System nach Anspruch 8, das des Weiteren ein Mittel umfasst, um den gesamten Inhalt oder ein Teil des Inhalts mit Hilfe von Verschlüsselungsdaten zu codieren, die in den Berechtigungsnachweisdaten enthalten sind, wobei das Auffrisch- oder Ausführungsprogramm des Weiteren die Funktion der Decodierung des codierten Inhalts mit Hilfe der Verschlüsselungsdaten umfasst.

10. System nach Anspruch 9, das ein Mittel umfasst, um die Verschlüsselungsdaten für ungültig zu erklären, wenn eine von dem ersten oder aber dem zweiten Feststellungsmittel getroffene Feststellung negativ ist.

11. System nach Anspruch 8, das des Weiteren ein Mittel zur Speicherung der Berechtigungsnachweisdaten in einer versteckten Datei des Systems umfasst.

12. System nach Anspruch 8, das des Weiteren ein Mittel zur Einbettung der Berechtigungsnachweisdaten in den Inhalt umfasst.

13. System nach Anspruch 8, das des Weiteren ein Mittel zur Einbettung der Berechtigungsnachweisdaten in ein Programm zur Nutzung des Inhalts umfasst.

14. Client/Server-Rechnersystem, das ein Rechnersystem nach einem der Ansprüche 8 bis 13 als Client sowie einen Server-Rechner umfasst, wobei der Server-Rechner Folgendes umfasst:
ein Mittel, um die Berechtigungsnachweisdaten als Antwort auf eine Anforderung von dem Client-Rechner, den Inhalt von dem Server-Rechner herunterzuladen, zu erzeugen; und
ein Mittel, um den Inhalt, ein Programm zur Nutzung des Inhalts und die Berechtigungsnachweisdaten oder eine codierte Datei dieser Daten vom Server-Rechner an den Client-Rechner über ein Netzwerk zu senden.

15. Programm, das von einem Rechner ausgeführt werden kann, um den Zugriff auf einen elektronisch gespeicherten und geschützten Dateninhalt (7) zu steuern, wobei das Programm Befehle umfasst, die, wenn sie ausgeführt werden, die folgenden Schritte durchführen:
Abrufen (41) von Berechtigungsnachweisdaten (8), die einen Nutzungsbeginnzeitpunkt, der den Zeitpunkt des erlaubten Nutzungsbeginns für den Inhalt angibt, einen Nutzungsendezeitpunkt, der einen Ablaufzeitpunkt für den Inhalt angibt, und einen Zeitpunkt der letztmaligen Nutzung, der angibt, wann der Inhalt zuletzt verwendet wurde, einschließen;
Abrufen (42) der aktuellen Zeitangabe von einem Systemzeitgeber (11);
Feststellen (43), ob der Zeitpunkt der letztmaligen Nutzung vor der aktuellen Zeitangabe liegt;
Feststellen (46), ob die aktuelle Zeitangabe vor dem Nutzungsendezeitpunkt liegt;
Gestatten (47) des Zugriffs auf den Inhalt, um ihn zu nutzen, wenn die Ergebnisse beider Feststellungsschritte positiv sind; und
Aktualisieren (48) des Zeitpunkts der letztmaligen Nutzung auf den Zeitpunkt, zu dem die Nutzung des Inhalts beendet wird, **dadurch gekennzeichnet, dass**
das Programm, wenn es ausgeführt wird, die folgenden weiteren Schritte durchführt:
Setzen der Zeitangabe eines unabhängigen Zählers auf eine von dem Systemzeitgeber abgerufene Zeitangabe, wenn das System aktiviert wird, und der Erfassung der Zeit unabhängig von dem Systemzeitgeber;
Abrufen der Zeitangabe von dem Zähler;
Aufzeichnung des Unterschieds zwischen der Zeitangabe des Zählers und der Zeitangabe des Systemzeitgebers; und
Korrektur des Zeitpunkts der letztmaligen Nutzung und des Nutzungsendezeitpunkts oder der aktuellen Zeitangabe mit Hilfe eines Zeitraums, der dem Unterschied entspricht.

16. Programm nach Anspruch 15, wobei der gesamte Inhalt oder ein Teil des Inhalts mit Hilfe von Verschlüsselungsdaten codiert wird, die in den Berechtigungsnachweisdaten enthalten sind, wobei das Programm, wenn es ausgeführt wird, des Weiteren die folgenden Schritte durchführt:
Decodieren des codierten Inhalts mit Hilfe der Verschlüsselungsdaten; und
Ungültigerklären der Verschlüsselungsdaten, wenn das Ergebnis von dem ersten oder aber dem zweiten Feststellungsschritt negativ ist.

## Revendications

1. Un procédé de contrôle d'accès à des contenus de données (7), stockés électroniquement et protégés; comprenant les étapes consistant à :
acquérir (41) des données d'authentification (8) comprenant un temps de début d'utilisation, spécifiant le temps de début d'utilisation autorisé pour le contenu, un temps de fin d'utilisation, spécifiant un temps d'expiration pour le contenu, et un temps de dernière utilisation, spécifiant le moment auquel les contenus ont été utilisés pour la dernière fois.;
acquérir (42) le temps actuel depuis une horloge système (11);
déterminer (43) le fait que le temps de dernière utilisation est antérieur audit temps actuel;
déterminer (46) si ledit temps actuel est antérieur audit temps de fin d'utilisation;
autoriser (47) l'accès auxdits contenus pour leur utilisation, si les résultats des deux dites étapes de détermination sont "vrai"; et
mettre à jour (48) ledit temps de dernière utilisation, avec le temps qu'on a lorsque ladite utilisation est achevée, **caractérisé en ce qu'** :
un programme de mise en oeuvre d'une fonction de compteur est fourni dans un système d'ordinateur, sur lequel lesdits contenus sont utilisés, le compteur fonctionnant toujours pendant le fonctionnement du système, le procédé comprenant en outre les étapes consistant à :
initialiser le temps de ladite fonction de compteur avec un temps ayant été acquis auprès de l'horloge système, lors de l'activation dudit système;
enregistrer la différence entre le temps dudit compteur et le temps de l'horloge système, lors de l'utilisation desdits contenus; et
corriger ledit temps de dernière utilisation et ladite fin d'utilisation ou ledit temps actuel, par utilisation d'une période de temps correspondant à ladite différence.

2. Le procédé selon la revendication 1, dans lequel la totalité ou une partie desdits contenus sont codées en utilisant des données de cryptage contenus dans lesdites données d'authentification, le procédé comprenant en outre l'étape de décodage des contenus codés, par utilisation desdites données de cryptage.

3. Le procédé selon la revendication 2, comprenant en outre l'étape d'annulation desdites données de cryptage si le résultat, soit de ladite première, soit de ladite deuxième étape de détermination, est "faux".

4. Le procédé selon la revendication 1, dans lequel lesdites données d'authentification sont enregistrées dans un fichier caché.

5. Le procédé selon la revendication 1, dans lequel lesdites données d'authentification sont incorporées dans lesdits contenus.

6. Le procédé selon la revendication 1, dans lequel lesdites données d'authentification sont incorporées dans un programme utilisant lesdits contenus.

7. Un procédé selon l'une quelconque des revendications précédentes, incluant les étapes de génération desdites données d'authentification, en réponse à une requête de déchargement des contenus, depuis un ordinateur client à un ordinateur serveur; et
envoi des contenus, d'un programme d'utilisation pour lesdits contenus et desdites données d'authentification ou d'un fichier codé de celles-ci, de l'ordinateur serveur à l'ordinateur client, sur un réseau.

8. Un système d'ordinateur pour contrôler l'accès de contenus en données, stockés électroniquement et protégées (7), comprenant :
des moyens (41) acquérir des données d'authentification (8), dans lequel lesdites données d'authentification comprennent un temps de début d'utilisation, spécifiant le temps de début d'utilisation autorisé pour les contenus, et un temps de fin d'utilisation, spécifiant un temps d'expiration pour les contenus;
des moyens (41) pour l'acquisition du temps actuel depuis une horloge système (11);
des moyens (43), pour déterminer si le temps de dernière utilisation desdits contenus est antérieur audit temps actuel;
des moyens (46), pour déterminer si ledit temps actuel est antérieur audit temps de fin d'utilisation;
des moyens (47), pour permettre l'accès auxdits contenus pour leur utilisation, si les déterminations effectuées par les deux desdits moyens de détermination donnent des résultats "vrais"; et
des moyens (48), pour mettre à jour ledit temps de dernière utilisation, avec le temps lorsque ladite utilisation desdits contenus est achevée, **caractérisé en ce que** :
le système comprenant en outre des moyens pour mettre en oeuvre une fonction de compteur, opérant toujours pendant que le système fonctionne, et dans lequel lesdits moyens de mise en oeuvre de ladite fonction de compteur comprennent des moyens pour initialiser le temps de ladite fonction de compteur avec un temps acquis auprès de l'horloge système, lors de l'activation dudit système; et des moyens peut compter le temps, indépendamment de ladite horloge système; le système comprend en outre des moyens pour enregistrer la différence entre le temps dudit compteur et le temps de l'horloge système; et des moyens pour corriger ledit temps de dernière utilisation et ledit temps de fin d'utilisation ou ledit temps actuel, par utilisation d'une période de temps correspondant à ladite différence.

9. Le système selon la revendication 8, comprenant en outre des moyens pour coder la totalité ou une partie desdits contenus en utilisant des données de cryptage, contenues dans lesdites données d'authentification, dans lequel ledit programme de régénération ou d'exécution comprend en outre la fonction de décodage desdits contenus codés, par utilisation desdites données de cryptage.

10. Le système selon la revendication 9, comprenant des moyens pour annuler lesdites données de cryptage, si la détermination faite, soit par ledit premier, soit par lesdits deuxièmes moyens de détermination, donnent un résultat "faux".

11. Le système selon la revendication 8, comprenant en outre des moyens pour stocker lesdites données d'authentification dans un fichier caché du système.

12. Le système selon la revendication 8, comprenant en outre des moyens pour incorporer lesdites données d'authentification dans lesdits contenus.

13. Le système selon la revendication 8, comprenant en outre des moyens pour incorporer lesdites données d'authentification dans un programme, pour utilisation desdits contenus.

14. Un système d'ordinateur client-serveur, comprenant un système d'ordinateur selon l'une quelconque des revendications 8 à 13, en tant que client, et un ordinateur serveur, ledit ordinateur serveur comprenant :
des moyens pour générer lesdites données d'authentification en réponse à une requête émanant dudit ordinateur client, pour décharger lesdits contenus, depuis ledit ordinateur serveur; et
des moyens pour envoyer lesdits contenus, un programme d'utilisation pour lesdits contenus et lesdites données d'authentification ou un fichier codé de celles-ci, depuis ledit ordinateur serveur à l'ordinateur client, sur un réseau.

15. Un programme exécutable par un ordinateur pour contrôler l'accès à des contenus de données, stockées électroniquement et protégées (7), le programme comprenant des instructions qui, une fois exécutées, effectuent les étapes consistant à :
acquérir (41) des données d'authentification (8) comprenant un temps de début d'utilisation, spécifiant le temps de début d'utilisation autorisé pour le contenu, un temps de fin d'utilisation, spécifiant un temps d'expiration pour le contenu, et un temps de dernière utilisation, spécifiant le moment auquel les contenus ont été utilisés pour la dernière fois.;
acquérir (42) le temps actuel depuis une horloge système (11);
déterminer (43) le fait que le temps de dernière utilisation est antérieur audit temps actuel;
déterminer (46) si ledit temps actuel est antérieur audit temps de fin d'utilisation;
autoriser (47) l'accès auxdits contenus pour leur utilisation, si les résultats des deux dites étapes de détermination sont "vrai"; et
mettre à jour (48) ledit temps de dernière utilisation, avec le temps qu'on a lorsque ladite utilisation est achevée, **caractérisé en ce que** :
un programme, une fois exécuté, effectue en outre les étapes consistant à : initialiser le temps d'un compteur indépendant, avec un temps acquis depuis l'horloge système, lors de l'activation du système, et compter le temps, indépendamment de ladite horloge système;
acquérir le temps auprès du compteur;
enregistrer la différence entre le temps dudit compteur et le temps de l'horloge système; et
corriger ledit temps de dernière utilisation et ledit temps de fin d'utilisation ou ledit temps actuel, par utilisation d'une période de temps correspondant à ladite différence.

16. Le programme selon la revendication 15, dans lequel la totalité ou une partie desdits contenus est codée en utilisant des données de cryptage contenues dans lesdites données d'authentification, le programme, une fois exécuté, effectuant en outre les étapes consistant à :
décoder des contenus codés, par utilisation desdites données de cryptage;et
annuler lesdites données de cryptage si le résultat, soit de la première, soit de la deuxième étape de détermination, donne un résultat "faux".
